(19) Europäisches Patentamt
European Patent Office
Office européen des brevets

(11) **EP 3 340 122 A1**

(12) **EUROPEAN PATENT APPLICATION**

(43) Date of publication:
**27.06.2018 Bulletin 2018/26**

(51) Int Cl.:
***G06N 3/04*** (2006.01)

(21) Application number: **17204237.6**

(22) Date of filing: **28.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.12.2016 US 201615385170**

(71) Applicant: **Intel Corporation
Santa Clara, CA 95054 (US)**

(72) Inventor: **DAVIES, Michael I.
Portland, OR 97205 (US)**

(74) Representative: **Samson & Partner Patentanwälte
mbB
Widenmayerstraße 6
80538 München (DE)**

(54) **COMPUTATIONALLY-EFFICIENT SPIKE TRAIN FILTERING**

(57) Aspects of the embodiments are directed to computationally modeling a filtered temporal spike train trace in the digital domain. A current value of the trace, and a parameter defining temporal behavior of the trace, are each stored. A decay function of the trace is computed based on the parameter and on passage of discrete time increments. Stimulus signaling is received, and an input response function of the trace is computed based on the stimulus signaling. A stochastic computation of the trace decay function may be performed based on a generated randomization value. In some embodiments, a delayed computation of the trace decay function may be performed.

*FIG. 4*

EP 3 340 122 A1

**Description**

TECHNICAL FIELD

The present disclosure relates generally to digital signal processing and, more particularly, to computational representation of a decaying-amplitude waveform activated by sparsely active additive impulse events. Some embodiments have applicability in neuromorphic computing using digital neuromorphic cores.

BACKGROUND

A neuromorphic processor is a processor that is structured to mimic certain aspects of the brain and its underlying architecture, particularly its neurons and the interconnections between the neurons, although such a processor may deviate from its biological counterpart. A neuromorphic processor may be composed of many neuromorphic (neural network) cores that are interconnected via a network architecture such as a bus or routing devices, which may direct communications between the cores. The network of cores may communicate via short packetized spike messages sent from core to core. Each core may implement some number of primitive nonlinear temporal computing elements (e.g., neurons). When a neuron's activation exceeds some threshold level, it may generate a spike message that is propagated to a set of fan-out neurons contained in destination cores. The network then may distribute the spike messages to destination neurons and, in turn, those neurons update their activations in a transient, time-dependent manner.

Each neuron maintains one or more state variables that represent the neuron's activation level. In typical operation, the state variables experience a step change in response to the occurrence of a spike at the input or the output, which decays as a function of time in an exponential manner. Historically, neurons have been modeled using analog architecture, which was inherently well-suited to modeling exponentially-decaying state variables. In digital neuromorphic architectures, modeling of an exponentially-decaying function presents a number of computational challenges.

BRIEF DESCRIPTION OF THE DRAWINGS

FIG. 1A is a high-level block diagram of a model neural core structure.
FIG. 1B is a pictorial diagram that illustrates one configuration of multi-compartment neurons and a dendritic accumulation process.
FIG. 1C is a pictorial diagram that shows a state structure of multiple compartments;
FIG. 2A is a block diagram illustrating state dynamics for a dendritic compartment according to a simple neuron model.
FIG. 2B is a block diagram illustrating state dynamics and the dendritic accumulation process for a dendritic compartment according to a multi-compartment neuron model.
FIG. 3 is a simplified timing diagram illustrating a trace variable as a function of time, according to an example use case.
FIG. 4 is a block diagram illustrating a trace engine according to an illustrative example embodiment.
FIG. 5 is a flow diagram illustrating an example process that may be executed by trace engine 402 according to some embodiments.
FIGs. 6A-6C provide a pseudocode example of a process of carrying out the computation of a trace variable according to an illustrative embodiment.

DETAILED DESCRIPTION

Aspects of the embodiments are directed to modeling exponential functions, such as exponential decay as a function of time, in a digital system. Typically, exponential functions of the basic form $y=a^n$ are evaluated by performing a series of $n$ repeated multiplication operations of $a$, in each time step. For high-resolution numerical representations using floating-point values, a large number of bits would conventionally be utilized, which presents a computational burden in terms of hardware complexity and cost, or operational complexity and computational load.

These challenges are seen in a variety of discrete-time digital computing systems. In the description that follows, examples are discussed in the context of neuromorphic computing systems; however, it will be understood that the principles of the concepts described herein may be applied more generally in computing systems that are used to model exponential functions with discrete-time steps.

In a neuromorphic computing system that incorporates spike-timing-dependent plasticity (STDP) learning, a network of neural network cores communicate via short packetized spike messages sent from core to core. Each core implements some number of neurons, which operate as primitive nonlinear temporal computing elements. When a neuron's activation exceeds some threshold level, it generates a spike message that is propagated to a set of fan-out neurons contained in destination cores. In managing its activation level, each neuron maintains a trace variable that is incremented (e.g., as an impulse response) in response to each spike. Following each spike, the trace variable decays in an exponential manner. This exponential decay, modeled as an exponential function, may continue for a number of time steps, during which additional spikes may or may not arrive.

The network distributes the spike messages to all destination neurons, and in response those neurons update their activations in a transient, time-dependent manner, similar to the operation of real biological neurons.

The basic implementation of some applicable learning algorithms may be provided through spike timing dependent plasticity, which adjusts the strength of connections (e.g., synapses) between neurons in a neural network based on correlating the timing between an input spike and an output spike. Input spikes that closely proceed an output spike for a neuron are considered causal to the output and are strengthened while other input spikes are weakened. Specifically, here, the techniques provide the ability to use spike times to allow a neural network's operation to be equally modified in an unsupervised learning mode or in a reinforced learning mode.

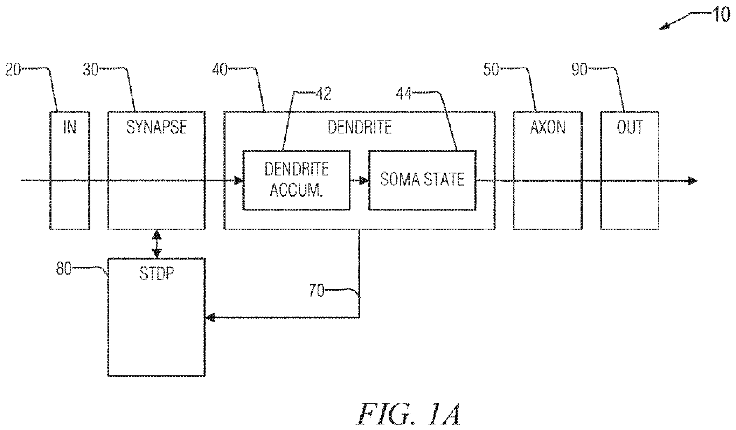

FIG. 1A is a simplified block diagram illustrating an example neural core structure 10 that loosely models a biological neural structure. A signal is provided at an input 20 to the synapse 30 (input 20 in this example represents a fan-out within the core to other dendrite structures with appropriate weight and delay offsets) and, after processing, is provided to a dendrite structure 40 comprising a dendrite accumulator 42 and a soma state store 44. The dendrite structure 40 output is provided to an axon 50 (this is a fan-out within the core to other destination cores) for subsequent output 90.

The system may also support backwards-propagation processing. In biology, when the soma spikes, in addition to that spike propagating downstream to the output neurons, the spike also propagates backwards down through a dendritic tree, which is beneficial for learning. The synaptic plasticity at the synapses is a function of when the postsynaptic neuron fires and when the presynaptic neuron is firing-the synapse knows when the neuron is fired. In a multi-compartment architecture, once the soma fires, there are other elements that know that the neuron fired in order to support learning, e.g., so all of the input fan-in synapses 30 may see that the neuron fired. The spike timing dependent plasticity (STDP) engine 80 may receive this backwards action potential (bAP) notification 70 and communicate with the synapses 30 accordingly.

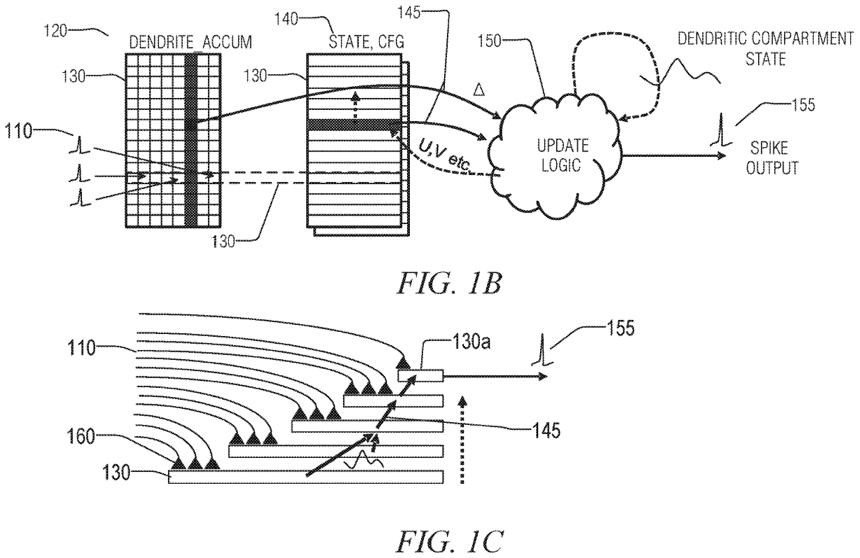

FIG. 1B is a diagram that illustrates an example configuration of a multi-compartment neuronal and a dendritic accumulation process for handling and scheduling spikes into the future inside the core. Synaptic inputs 110 are provided to a dendrite accumulator structure 120, which may be configured as a dedicated data store, or a data structure allocated in a general data store, to maintain synaptic stimulation counters of weight values for a particular compartment 130. In the present context, a compartment 130 is an abstract neural unit that contains state and configuration variables 140 representing the dynamic state of a neuron. It is a component of a dendritic tree that may be processed in sequence with related compartments. Preserving some state information for a compartment 130 and passing it along as the compartments are processed provides for a broad class of information processing that may take place in the core.

The processing of compartments 130 may be limited if the state information is not preserved and passed on in subsequent processing. A simple spiking neuron model may invoke both excitatory input and inhibitory input, and the two input classes have two different time constants typically, which may control the filtering that is applied to the time-domain inputs.

A dendrite accumulator structure 120 may maintain synaptic stimulation counters of weight values for a particular compartment 130, with the compartment being a breakdown of a neural tree structure or simply an abstract neural unit. Each compartment 130 may have state variables (u, v) that contain a dynamic state of what is occurring in the neuron.

A sequential process with the update logic 150 may walk through all of these compartments 130 (technically, compartment indices), and receive numbers and state variables 145 from each of the compartments 130, and provide a spike output 155. Because this is a sequential process, it is inexpensive and easy to preserve some state information that is associated with propagating information of the tree while looping around in the update logic 150 utilizing temporary register storage in the logic.

FIG. 1C is a pictorial diagram that shows a state structure of multiple compartments and illustrates how the sequential walk through the compartment indices 130 generally resembles a tree. Each of the rows 130 of this state structure, which may be memories in the core's SRAMs, represents a compartment 130 that receives synaptic input 110, via synaptic connections 160. The core walks through these with numbers and state variables 145 being propagated from each of the compartments 130, up to one final route compartment 130a which would be the soma (in the biological nomenclature), which provides a spike output 155. All of the other compartments 130 in FIG. 1C are simply passing on their intermediate terms. Any dendrite index may be configured as either a compartment in the dendritic tree or a soma. The tree structure may be implemented by propagating and combining real-valued current and/or voltage states iteratively, as described below.

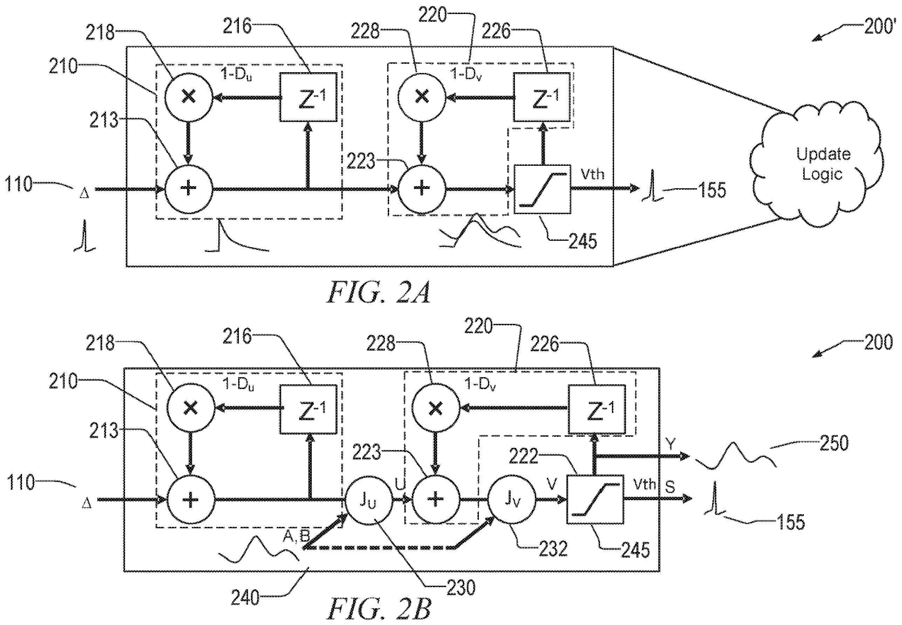

FIG. 2A is a block diagram illustrating state dynamics for a dendritic compartment 200' (use of the term "dendrite" below is to be construed synonymous with, and as shorthand for, the phrase "dendritic compartment") according to a simple neuron model, which is basically a discrete time filtering circuit. A first state variable operation 210 may be performed that is based on a stored first state variable, in this example, the current u, and the spike input 110 received. A second state variable operation 220 may then be subsequently performed that is based on a stored second state variable, in this example, the voltage v, and the output of the first variable operation 210. A threshold function 245 may be utilized to determine if the dendritic compartment 200' should spike or at least indicate a spiking value even if it does not actually spike.

The example embodiments described herein may include, or may operate on, logic or a number of components, functions, processes, or engines, which for the sake of consistency are termed engines, although it will be understood that these terms may be used interchangeably. Engines may be hardware, software, or firmware communicatively coupled to one or more processors in order to carry out the operations described herein. Engines may be hardware engines, and as such engines may be considered tangible entities capable of performing specified operations and may be configured or arranged in a certain manner. In an example, circuits may be arranged (e.g., internally or with respect to external entities such as other circuits) in a specified manner as an engine. In an example, the whole or part of one or more computer systems (e.g., a standalone, client or server computer system) or one or more hardware processors may be configured by firmware or software (e.g., instructions, an application portion, or an application) as an engine that operates to perform specified operations. In an example, the software may reside on a machine-readable medium. In an example, the software, when executed by the underlying hardware of the engine, causes the hardware to perform the specified operations. Accordingly, the term hardware engine is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which engines are temporarily configured, each of the engines need not be instantiated at any one moment in time. For example, where the engines comprise a general-purpose hardware processor configured using software; the general-purpose hardware processor may be configured as respective different engines at different times. Software may accordingly configure a hardware processor, for example, to constitute a particular engine at one instance of time and to constitute a different engine at a different instance of time.

FIG. 2B is a block diagram illustrating state dynamics and the dendritic accumulation process for a dendritic compartment 200 according to a multi-compartment neuron model. The dendritic compartments 200, 200' may be, for example, the dendritic compartments 130 described above. The diagram of FIG. 2B is similar to the diagram in FIG. 2A, and a description of similar elements will not be repeated. However, in the design shown in FIG. 2B, to enhance the design for the multi-compartment processing, two points $J_U$ 230, Jv 232, have been added in the logic where information coming from earlier compartments A, B 240 in the sequential process may be joined.

As an example, a neuron may be stimulated with both excitatory and inhibitory input, each with its own exponential filtering time constant. This spiking neuron model and networks of these neurons may be capable of implementing powerful neural information processing algorithms (e.g., E/I networks).

With the multi-compartment support described herein, an E/I neuron may be constructed out of two primitive units, one that integrates the "E" input with the $\tau_E$ time constant, the other the "I" input with $\tau_I$ time constant. In another example, a more complex single neuron model may include the complexity of the E/I neuron implementation. Since many neuromorphic algorithms may not need this complexity, the presently described architecture provides a flexible and efficient neuromorphic processing solution. The architecture may be generalized to an extremely flexible neuromorphic neuron processor that may, through programming, implement conventional neuron models (some with potentially significant value for machine learning applications).

The structure described above provides a way to join in, as in a tree structure, the earlier input A, B 240 on towards the leaves of a dendritic tree. In each of these join operations Ju 230, Jv 232, there are two state variables u (current) and v (voltage), which are two dynamic variables, that are interlinked. Since there are two such variables in this example, there are two different join possibilities (join points in the signal flow) 230, 232.

The current from the earlier input 240 may be provided at a first junction point 230, and the voltage from the earlier input 240 may be provided at a second junction point 232. A spike function 222 may determine if a spike threshold value has been reached to determine whether to send a spike S 155 (or value representative of a spike), and furthermore, a value Y 250 (i.e., one or more numbers representing state variables of the dendritic compartment 200) that includes further information in a form of continuous data related to the current state of the dendritic compartment 200.

In biology, an efficiency may be realized by communicating numbers 250 (i.e., continuous data) as opposed to just binary spike values 155. The generation of neural networks that is focused on spiked base signaling is largely driven by the efficiency that comes from long-range parallel communication using just a bare minimum of information for energy and performance efficiency. Although it is possible to process a large space of algorithmic problems with a spike based signaling methodology, this approach only goes so far. There is still value in communicating numbers 250 as opposed to just binary spike events 155 with temporal codes, specifically when the communication is sufficiently local. Biological neurons use their dendritic trees for this purpose. A dendritic tree may be viewed as a spatially local region of the neuron over which it is efficient to send continuous current or voltage values across the membrane of the neuron.

A series of join operations may be provided that are similar to an instruction set that the core supports. For example, one might add the u variable along with an input from another compartment. Or, instead of an add, a multiply may be used as the join operation. One could also include, for example, an AND of a spiking condition of whether the input compartment is past its threshold or not, and then whether this compartment's v has passed its threshold or not- one could take the AND condition of those two, or the OR condition of those two. There are a number of different operations that may be defined (see Table 1 below).

The structure that includes information from other compartments gives the dendritic tree structure a large amount of computational capability, compared to either a conventional feed-forward Artificial Neural Network model or a pure spike-based network. This creates a very flexible interlinked dynamic system of these differential equation state variables. The design features backwards, event-driven sequential traversal of the sequential units to propagate spiking information back to the synapses for synaptic plasticity (e.g., weight updates according to STDP rules). Disrupting the forward iteration over the units comes at a cost in performance and energy and therefore is only done sparingly, i.e., whenever a unit spikes. Typically, this occurs when the root of the tree, corresponding to the neuron's soma compartment, spikes.

A set of operations may be provided, described in more detail in Table 1 below, that may be viewed as an instruction set of what the core supports. For example, one could add from the u variable and provide input from the other compartment 240. One could multiply, take an AND of a spiking condition of whether the input compartment is past its threshold or not, and then whether the current compartment has passed its threshold or not. One could also take an OR of those two, or use any number of different defined join operations. This approach gives the dendritic tree structure a huge amount of computational capability. It is not just a feed forward calculator, but rather becomes an interlinked dynamic system of these differential equations state variables.

*Table 1*

| Field | Bits | Description | Encoding | |
|---|---|---|---|---|
| StackIn | 15:14 | Compartment stack input handling | 0: (SKIP) | Don't read from the CStack |
| | | | 1: (PEEK) | Peek from the CStack |
| | | | 2: (POP) | Pop from the CStack |
| | | | 3: (POP2) | Pop two from the CStack |
| StackOut | 13:12 | Compartment stack output handling | 0: (SKIP) | Don't push to the CStack |
| | | | 1: (PUSH) | Push (Y, S) to the CStack |
| | | | 2: (PUSHN) | Push (normalize(Y), S) to the CStack |
| JoinOp | 11:8 | Compartment join operation | 0: (NOP) | |
| | | | 1: (ADD_U) | $U' = U+A+B$ |
| | | | 2: (MAX_U) | $U' = \max(U, A, B)$ |
| | | | 3: (MIN_U) | $U' = \min(U, A, B)$ |
| | | | 4: (PASS_U) | $U' = A.S\ ?\ U+B : 0$ |
| | | | 5: (BLOCK_U) | $U' = A.S\ ?\ 0 : U+B$ |
| | | | 6: (OR_S) | $S' = A.S\ \|\ B.S\ \|\ S$ |
| | | | 7: (AND_S) | $S' = A.S\ \|\ B.S^*\ \&\ S$ |
| | | | 8: (MUL_V) | $U' = U+B;\ V' = V*A/2^{23}$ |
| ThreshOp | 7:6 | Operation to apply when V > Vth | 0: Spike | |
| | | | 1: Spike w/ random RefractDelay | |
| | | | 2: Evaluate S=V>Vth only | |
| | | | 3: Evaluate S=V>Vth and saturate at Vth | |
| bAP_Src | 5:2 | Mask over potential bAP sources | 0: Activate bAP when V>Vth | |
| | | | 1: unused | |
| | | | 2: Activate bAP when S=1 from cx input 0 | |
| | | | 3: Activate bAP when S=1 from cx input 1 | |
| bAP_Action | 1:0 | Action to apply when bAP occurs | Bit 0: Activate refractory state | |
| | | | Bit 1: Propagate bAP backwards | |
| * B.S=1 if not valid (i.e., when JoinOp==POP, not POP2 | | | | |

*Example Operations*

Thus, this construction makes the neural processor more closely analogous to a "normal" digital computer's processor-it is a programmable structure (in a sense), where each compartment, through programming, may be controlled to function in a particular manner, through its input stack operation, its output stack operation, join operation(s), the threshold operation (whether to spike when a threshold is exceeded, or even whether the threshold is simply evaluated but does not change the neuron state, as a spike would (i.e., just conveying the state of whether the threshold has been exceeded or not)). These functions may all be programmed in, and this may be considered part of the programming of the core. This "programming" causes the core to execute different neuromorphic algorithms as a result of the multi-compartment dendritic interactions.

In biology, when the soma spikes, the spikes propagate backwards to down through the dendritic tree-this is beneficial for learning. The synaptic plasticity at the synapses is a function of when the postsynaptic neuron fires and when the presynaptic neuron is firing, so the synapse needs to be informed of when the neuron is fired. A multi-compartment architecture may pose a problem for learning once the soma compartment fires, since there are other input compartments that also need to be informed that the neuron fired in order to support learning, so that all of its input fan-in synapses may see that event. This may be part of a spike timing dependent plasticity (STDP) model, which may implement Hebbian learning, anti-Hebbian learning, and other models.

The backwards propagation may be implemented without further configuration of the core needed for the core to be able to traverse backwards. However, for the sake of efficiency, it is undesirable for the backwards propagation to be continuously active. Because a time-multiplexed pipelined implementation is used (for an efficient hardware realization), there are multiple forward processing steps all in execution as the system is iterating through all of the compartments. The backwards spike propagation may be considered analogous to an exception in normal processor technology. The pipeline may be flushed, and the processing may go back to some known point. Here, the process will identify a spiking compartment as it iterates through the compartments-at which point the processor may need to flush the active compartments and then perform a backwards traversal/propagation.

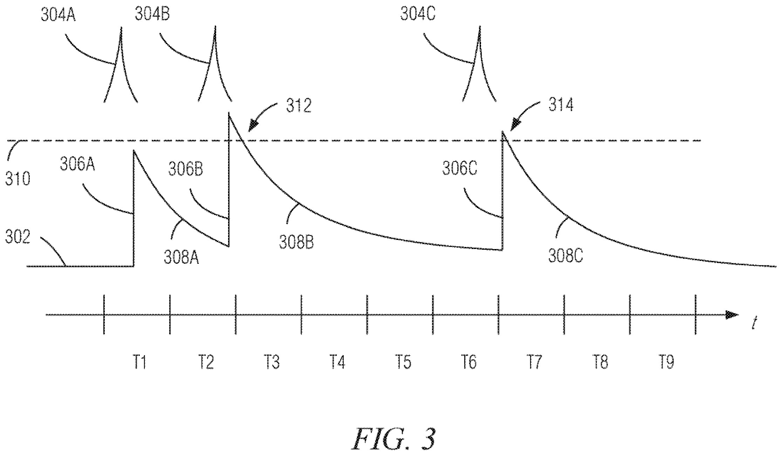

FIG. 3 is a simplified timing diagram illustrating a trace variable 302, which may be maintained at a neuron, as a function of time t, according to an example use case. For the sake of simplicity and ease of illustration, trace variable 302 is depicted as a continuous function over time periods T1-T9, though in a practical embodiment, each time period T1-T9 may contain 50-100 actual discrete time increments, and the value of trace variable 302 would remain constant for the duration of each individual time step.

Input stimuli 304A, 304B, and 304C (collectively referenced as input events 304) are shown as impulses, which may be spikes at the input or output of the neuron. Input events 304 may vary in their weighting in some implementations. Each input stimulus 304A-304C causes a response in the neuron that affects the trace variable 302. In the example depicted, each input stimulus causes a step change in the positive direction, indicated at 306A, 306B, and 306C, followed by an exponential decay as indicated at 308A, 308B, and 308C. The exponential decay 308 follows an exponential curve that may be defined with a time constant $\tau$. The neuron may be configured with an activation threshold 310 which, when exceeded by the trace variable (as depicted at 312 and 314), may cause a corresponding activation response, such as an output spike or a change in the neuron's input weight or threshold (not shown). The resulting trace is a filtered temporal spike train trace.

A basic computation of each exponential decay function over n time increments may be expressed as $x_n = x_0 \alpha^n$, where $x_0$ represents the initial value, and $\alpha$ is a decay factor that corresponds to the time constant $\tau$ of the exponential function. As a basic approach, n multiplication operations would be computed. However, according to some embodiments, an N-bit expression of $n$ may be represented in binary as $n = \sum_{i=0}^{N} n_i 2^i$, where $n_i$ represents the binary value for each bit position i. Advantageously, this computational technique reduces the $x_n$ computation to at most $[\log_2 n]$ multiplication operations according to $X_n = x_0 \prod_{i|n_i=1} \alpha^{2^i}$.

In a related embodiment, a quantity N constants of $\alpha^{2^i}$ are pre-computed and stored in a data store to be looked up rather than computed for improved computational efficiency.

In a related embodiment, the neuron performs a delayed computation of the exponential decay function at the time when the decayed value of the exponential decay function is to be used for processing or decision-making, such as in response to an input stimulus. Thus, during the time increments when there are no input stimuli, the neuron engine is free from having to compute the exponential decay of the trace variable. This relieves the system from having to expend energy and computational resources, particularly when a delayed computation of the decayed result may be performed with fewer operations, as exemplified above. In performing the delayed exponential decay computation, the time increments during which the function experienced decay are taken into account.

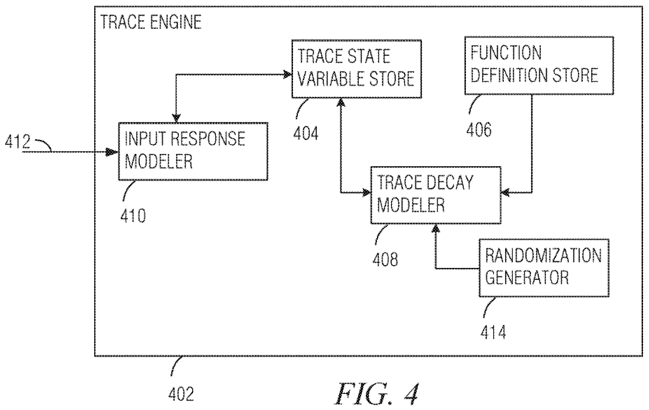

FIG. 4 is a block diagram illustrating a trace engine 402, which may be implemented in a neuron, a synapse, a core, or a compartment of a neuromorphic computing system, or traditional computing architecture, according to an illustrative example embodiment. More generally, trace engine 402 may be implemented on computing hardware, including processing and data storage circuitry. Trace engine 402 includes trace state variable store 404, which is programmed, constructed, or otherwise configured, to store a current value of the trace, which gets updated at regular, or irregular intervals, with the latter being implemented in embodiments where the decay function computation is delayed. In some embodiments, trace state variable store 404 stores a plurality of state variables associated with different time constants.

Function definition store 406 is programmed, constructed, or otherwise configured, to store a parameter defining temporal behavior of the trace. This parameter may be time constant $\tau$, multiplication factor $\alpha$, or a positive-valued constant $\lambda$ defined as $\dfrac{2^{N}-1}{\tau}$, for example. A trace decay modeler 408 is programmed, constructed, or otherwise configured, to compute a decay function of the trace based on the parameter and on passage of discrete time increments. Input response modeler 410 is programmed, constructed, or otherwise configured, to receive stimulus signaling 412 and to compute an input response function of the trace based on the stimulus signaling. This may be a simple addition such as a step increase of the trace variable's value, for instance.

In a related embodiment, trace decay modeler 408 is configured to perform a stochastic computation of the trace decay function based on a generated randomization value, which may be produced by randomization generator 414. Randomization generator 414 may be a pseudo-random number generator, such as a linear-feedback shift register (LFSR), for example. In an example, the stochastic computation of the trace decay function is based on a probability-based decrementing of the trace state variable. The probability of decrementing the trace state variable may be defined as $\dfrac{x}{\tau}$, where x is a sufficiently small value of the trace state variable and $\tau$ is the exponential time constant associated with the parameter defining the temporal behavior of the trace (e.g., $x < \tau$).

In an example, trace decay modeler 408 compares the randomization value against a value based on the current value of the trace to produce a comparison result. Trace decay modeler 408 is to decrement the current value of the trace conditionally in response to the comparison result when the current value of the trace has been decayed to an extent where more than one time increment corresponds to a further incremental reduction in the value of the trace.

In a related example, given a uniform random variable $R \in [0, \lambda \cdot \tau] = [0, 2^{N})$, the decrement decision D will have a suitable probability distribution by computing a simple comparison: $D = R \le \lambda \cdot x$. In a related embodiment, D may be determined by $D = \lambda \cdot x \le R$. An LFSR may be used to produce the desired random numbers R in this range with $\lambda$ chosen such that $\lambda \cdot \tau$ is a power of two.

In a related embodiment, the probability of decrement is $P(dec\ after\ n\ steps) = 1 - (1 - p)^{n}$, where p is defined as $\lambda \cdot x$, as above. This may be computed with at most $\lceil \log_{2} n \rceil$ probability evaluations of the form $(1 - p)^{2^{i}}$, all ANDed followed by a negation. This computation is efficient for power-of-two $\tau$ and does not require any pre-computed constants.

The above-described stochastic decrementing decision-making is applicable when the trace variable is small, e.g., where x is expected to require more than one time step to decrement. In terms of the exponential time constant $\tau \hat{=} (2^{N}-1)/\lambda$, this corresponds to the point where $p(decrement) = 1$, which occurs at $x = \tau$.

For larger values of the trace variable x, e.g., $x > \tau$, the current value of the trace may be represented by a first set of bits corresponding to a whole value and a second set of bits corresponding to a fractional value. Trace decay modeler 408 may apply a randomized rounding to the fractional value to improve the average precision of the exponential decay computation. As a result, only the first set of bits need to be stored. In some embodiments, trace decay modeler 408 operates in an asynchronous regime in which different operations of trace decay modeler 408 are computed over different amounts of time.

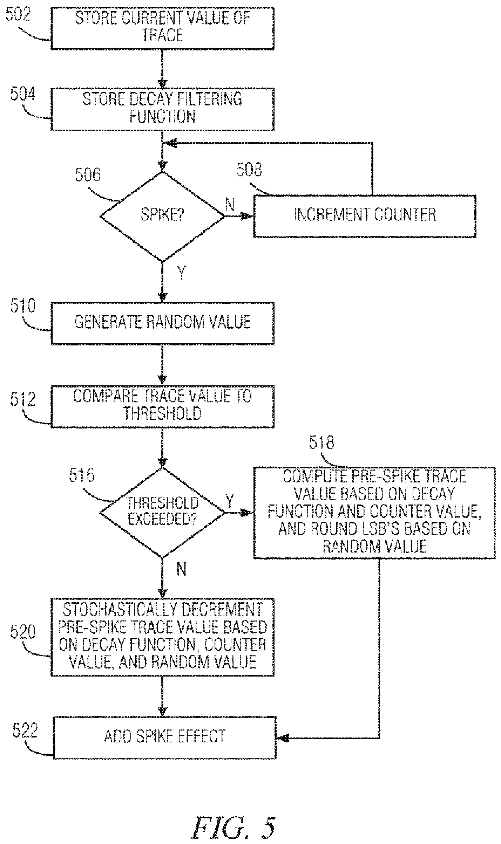

FIG. 5 is a flow diagram illustrating an example process that may be executed by trace engine 402 according to some embodiments. At 502, the current value of the trace variable is stored. This may be a trace value after processing of an input spike has been completed. At 504, a decay filtering function is stored. The decay filtering function may be represented in terms of a time constant $\tau$, $\lambda$, or $\alpha$, values as discussed above, for example, to represent an exponential decay function. Decision 506, determines whether a new spike has arrived at the input. In the negative case, a counter is incremented at 508 to represent the passage of a discrete time increment. Otherwise, in response to arrival of a spike, the value of the trace is to be updated.

Accordingly, the decay over the time increments since the last update of the trace value is taken into account. At 510, a random value is generated. At 512 the trace value is compared against a threshold to determine the type of stochastic trace computation is to be applied. Accordingly, if the threshold is exceeded at 516, the process proceeds to 518, where the spike value is computed according to the decay filtering function, the counter value, and rounding of the least-significant bits (LSB's) according to the larger trace variable value approach described above, which uses the computed random value at 510. If the threshold is not exceeded at 516, then the process proceeds to 520, where the trace value is computed by stochastic decrementing of the trace value based on the decay filtering function, the counter value, and probabilistic decrementing of the trace value as discussed above for small-valued traces.

At 522, the effect of the spike that has arrived is computed. This may involve adding a corresponding value to the trace, for instance.

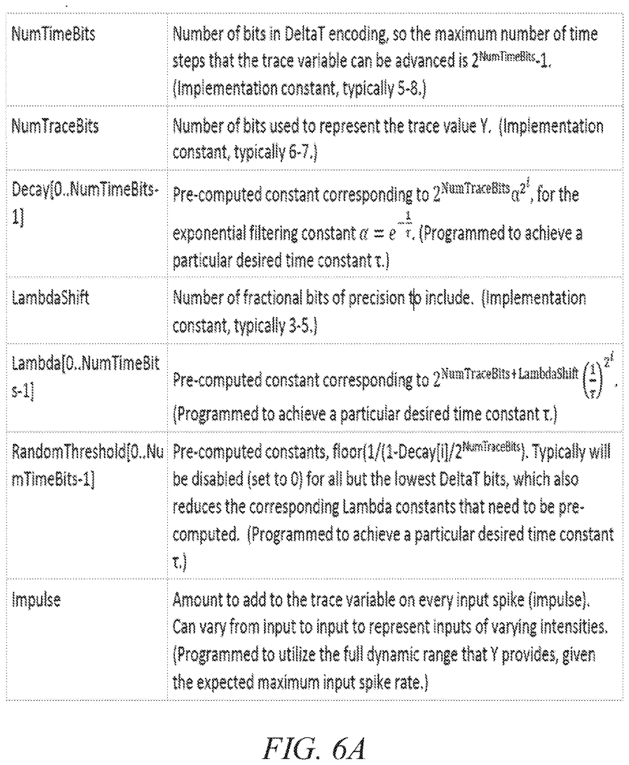

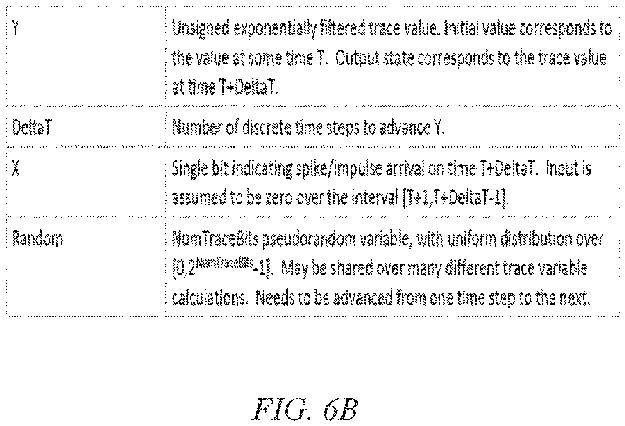

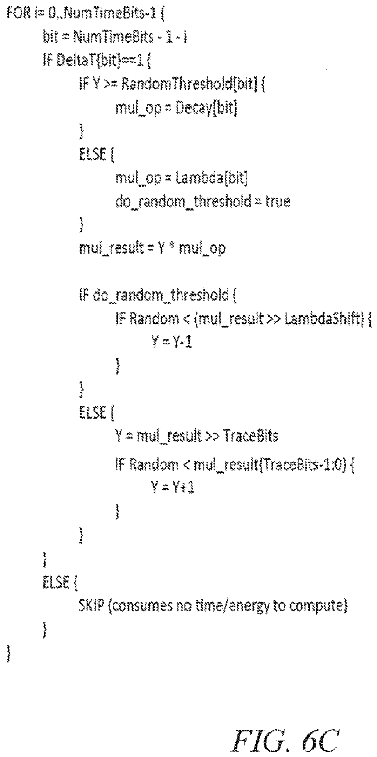

FIGs. 6A-6C provide a pseudocode example of a process of carrying out the computation of a trace variable in greater detail according to an illustrative embodiment. In this example, a notation convention is followed where A[val] represents tabular indexing of A[0..#entries-1], and A{val}represents bit extraction of binary-coded value A. FIG. 6A describes the various parameters utilized in the pseudocode example. FIG. 6B describes the variables used in the pseudocode example. FIG. 6C is a listing of the pseudocode example itself.

Additional Notes and Examples:

In Example 1, the subject matter of Example undefined optionally includes is missing parent: 1, wherein the stochastic computation of the trace decay function is based on a probability-based decrementing of the trace state variable.

In Example 2, the subject matter of Example 1 optionally includes wherein the probability-based decrementing of the trace state variable is defined as $x/\tau$, wherein x is a value of the trace state variable and wherein $\tau$ is the exponential time constant associated with the parameter defining the temporal behavior of the trace.

In Example 3, the subject matter of Example undefined optionally includes is missing parent: 1, further comprising a pseudo-random number generator to generate the randomization value.

In Example 4, the subject matter of Example 3 optionally includes wherein the pseudo-random number generator includes a linear-feedback shift register.

In Example 5, the subject matter of Example undefined optionally includes is missing parent: 1, wherein the trace decay modeler is to compare the randomization value against a value based on the current value of the trace to produce a comparison result, and wherein the trace decay modeler is to decrement the current value of the trace conditionally in response to the comparison result when the current value of the trace has been decayed to an extent wherein more than one time increment corresponds to a further incremental reduction in the value of the trace.

In Example 6, the subject matter of Example undefined optionally includes is missing parent: 1, wherein an intermediate value of the trace is represented by a first set of bits corresponding to a whole value and a second set of bits corresponding to a fractional value, and wherein decay modeler is to apply a randomized rounding to the fractional value such that only the first set of bits is stored.

In Example 7, the subject matter of Example undefined optionally includes is missing parent: 1, wherein the temporal behavior of the trace is an exponential decay corresponding to a defined time constant.

In Example 8, the subject matter of Example undefined optionally includes is missing parent: 1, wherein the computing hardware is to implement a neuromorphic computing system that includes a plurality of neural network cores configured to send and receive spike messages, wherein the stimulus signaling includes the spike messages, and wherein the trace engine is a portion of a first neural network core of the plurality of neural network cores.

In Example 9, the subject matter of Example 8 optionally includes wherein the neuromorphic computing system is constructed to operate in an asynchronous regime in which different operations of the trace decay modeler are computed over different amounts of time.

In Example 10, the subject matter of any one or more of Examples 8-9 optionally include wherein the neuromorphic computing system is constructed to operate according to a spike timing-dependent plasticity model.

In Example 11, the subject matter of Example undefined optionally includes is missing parent: 1, wherein the trace state variable store stores a plurality of state variables associated with different time constants.

In Example 12, the subject matter of Example undefined optionally includes is missing parent: 1, wherein the trace decay modeler is to perform a delayed computation of the trace decay function in response to a stimulus signal received by the input response modeler following passage of a plurality of discrete time increments during which no stimulus signaling occurs and during which no computation of the trace decay function was performed, wherein the delayed computation takes into account decay of the trace occurring over the plurality of discrete time increments.

In Example 13, the subject matter of Example 12 optionally includes wherein the trace decay modeler is to perform at most $\log_2(n)$ iterative computation operations based on the parameter defining the temporal behavior of the trace, wherein n represents the quantity of the plurality of discrete time increments during which no stimulus signaling occurs and over which the decay of the trace is to be computed.

In Example 14, the subject matter of any one or more of Examples 12-13 optionally include wherein the trace engine further includes a pre-computed constant store containing a quantity N of pre-computed constants $\alpha^{2^i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

Example 15 is apparatus for computationally modeling a filtered temporal spike train trace in the digital domain, the apparatus comprising: computing hardware, including processing and data storage circuitry; wherein the computing hardware is to implement a trace engine that includes: a trace state variable store to store a current value of the trace; a function definition store to store a parameter defining temporal behavior of the trace; a trace decay modeler to compute a decay function of the trace based on the parameter and on passage of discrete time increments; and an input response modeler to receive stimulus signaling and to compute an input response function of the trace based on the stimulus signaling; wherein the trace decay modeler is to perform a delayed computation of the trace decay function in response to a stimulus signal received by the input response modeler following passage of a plurality of discrete time increments during which no stimulus signaling occurs and during which no computation of the trace decay function was performed, wherein the delayed computation takes into account decay of the trace occurring over the plurality of discrete time increments.

In Example 16, the subject matter of Example 15 optionally includes wherein the trace decay modeler is to perform at most $\log_2(n)$ iterative computation operations based on the parameter defining the temporal behavior of the trace, wherein n represents the quantity of the plurality of discrete time increments during which no stimulus signaling occurs and over which the decay of the trace is to be computed.

In Example 17, the subject matter of any one or more of Examples 15-16 optionally include wherein the trace engine further includes a pre-computed constant store containing a quantity N of pre-computed constants $\alpha^{2^i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

In Example 18, the subject matter of any one or more of Examples 15-17 optionally include wherein the trace decay modeler is to perform a stochastic computation of the trace decay function based on a generated randomization value.

In Example 19, the subject matter of Example 18 optionally includes wherein the stochastic computation of the trace decay function is based on a probability-based decrementing of the trace state variable.

In Example 20, the subject matter of any one or more of Examples 18-19 optionally include wherein the probability of decrementing the trace state variable is defined as $x/\tau$, wherein x is the trace state variable and wherein $\tau$ is the exponential time constant associated with the parameter defining the temporal behavior of the trace.

In Example 21, the subject matter of any one or more of Examples 18-20 optionally include wherein the trace decay modeler is to compare the randomization value against a value based on the current value of the trace to produce a comparison result, and wherein the trace decay modeler is to decrement the current value of the trace conditionally in response to the comparison result when the current value of the trace has been decayed to an extent wherein more than one time increment corresponds to a further incremental reduction in the value of the trace.

In Example 22, the subject matter of any one or more of Examples 18-21 optionally include wherein an intermediate value of the trace is represented by a first set of bits corresponding to a whole value and a second set of bits corresponding to a fractional value, and wherein decay modeler is to apply a randomized rounding to the fractional value such that only the first set of bits is stored.

In Example 23, the subject matter of any one or more of Examples 15-22 optionally include wherein the temporal behavior of the trace is an exponential decay corresponding to a defined time constant.

In Example 24, the subject matter of any one or more of Examples 15-23 optionally include wherein the computing hardware is to implement a neuromorphic computing system that includes a plurality of neural network cores configured to send and receive spike messages, wherein the stimulus signaling includes the spike messages, and wherein the trace engine is a portion of a first neural network core of the plurality of neural network cores.

In Example 25, the subject matter of any one or more of Examples 15-24 optionally include wherein the neuromorphic computing system is constructed to operate in an asynchronous regime in which different operations of the trace decay modeler are computed over different amounts of time.

In Example 26, the subject matter of any one or more of Examples 15-25 optionally include wherein the neuromorphic computing system is constructed to operate according to a spike timing-dependent plasticity model.

In Example 27, the subject matter of any one or more of Examples 15-26 optionally include wherein the trace state variable store stores a plurality of state variables associated respectively with different time constants.

Example 28 is a method for computationally modeling a filtered temporal spike train trace in the digital domain, the method being executed by computing hardware, and comprising: storing a current value of the trace; storing a parameter defining temporal behavior of the trace; computing a decay function of the trace based on the parameter and on passage of discrete time increments; receiving stimulus signaling and computing an input response function of the trace based on the stimulus signaling; and performing a stochastic computation of the trace decay function based on a generated randomization value.

In Example 29, the subject matter of Example 28 optionally includes wherein the stochastic computation of the trace decay function is based on a probability-based decrementing of the trace state variable.

In Example 30, the subject matter of Example 29 optionally includes wherein the probability-based decrementing of the trace state variable is defined as $x/\tau$, wherein x is a value of the trace state variable and wherein $\tau$ is the exponential time constant associated with the parameter defining the temporal behavior of the trace.

In Example 31, the subject matter of any one or more of Examples 28-30 optionally include generating the randomization value using a linear-feedback shift register.

In Example 32, the subject matter of any one or more of Examples 28-31 optionally include comparing the randomization value against a value based on the current value of the trace to produce a comparison result; and decrementing the current value of the trace conditionally in response to the comparison result when the current value of the trace has been decayed to an extent wherein more than one time increment corresponds to a further incremental reduction in the value of the trace.

In Example 33, the subject matter of any one or more of Examples 28-32 optionally include wherein an intermediate value of the trace is represented by a first set of bits corresponding to a whole value and a second set of bits corresponding to a fractional value, and further comprising: applying a randomized rounding to the fractional value such that only the first set of bits is stored.

In Example 34, the subject matter of any one or more of Examples 28-33 optionally include wherein the temporal behavior of the trace is an exponential decay corresponding to a defined time constant.

In Example 35, the subject matter of any one or more of Examples 28-34 optionally include storing a plurality of state variables associated with different time constants.

In Example 36, the subject matter of any one or more of Examples 28-35 optionally include performing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 37, the subject matter of Example 36 optionally includes wherein in performing the delayed computation, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 38, the subject matter of any one or more of Examples 36-37 optionally include storing a quantity N of pre-computed constants $\alpha^{2^i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

Example 39 is a method for computationally modeling a filtered temporal spike train trace in the digital domain, the method being executed by computing hardware, and comprising: storing a current value of the trace; storing a parameter defining temporal behavior of the trace; computing a decay function of the trace based on the parameter and on passage of discrete time increments; receiving stimulus signaling and computing an input response function of the trace based on the stimulus signaling; and performing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 40, the subject matter of Example 39 optionally includes wherein in performing the delayed computation, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 41, the subject matter of any one or more of Examples 39-40 optionally include storing a quantity N of pre-computed constants $\alpha^{2^i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

In Example 42, the subject matter of any one or more of Examples 39-41 optionally include performing a stochastic computation of the trace decay function based on a generated randomization value.

In Example 43, the subject matter of Example 42 optionally includes wherein the stochastic computation of the trace decay function is based on a probability-based decrementing of the trace state variable.

In Example 44, the subject matter of any one or more of Examples 42-43 optionally include wherein the probability of decrementing the trace state variable is defined as $x/\tau$, wherein x is the trace state variable and wherein $\tau$ is the exponential time constant associated with the parameter defining the temporal behavior of the trace.

In Example 45, the subject matter of any one or more of Examples 42-44 optionally include comparing the randomization value against a value based on the current value of the trace to produce a comparison result; and

decrementing the current value of the trace conditionally in response to the comparison result when the current value of the trace has been decayed to an extent wherein more than one time increment corresponds to a further incremental reduction in the value of the trace.

In Example 46, the subject matter of any one or more of Examples 42-45 optionally include wherein an intermediate value of the trace is represented by a first set of bits corresponding to a whole value and a second set of bits corresponding to a fractional value, and further comprising: applying a randomized rounding to the fractional value such that only the first set of bits is stored.

In Example 47, the subject matter of any one or more of Examples 39-46 optionally include wherein the temporal behavior of the trace is an exponential decay corresponding to a defined time constant.

Example 48 is at least one machine-readable medium containing instructions that, when executed by computing hardware, cause the computing hardware to execute the method according to any one of Examples 28-47.

Example 49 is a system for computationally modeling a filtered temporal spike train trace in the digital domain, the system comprising means for executing the method according to any one of Examples 28-47.

Example 50 is at least one machine-readable medium containing instructions that, when executed by computing hardware, cause the computing hardware to computationally model a filtered temporal spike train trace in the digital domain, wherein the instructions are to cause the computing hardware to perform: storing a current value of the trace; storing a parameter defining temporal behavior of the trace; computing a decay function of the trace based on the parameter and on passage of discrete time increments; receiving stimulus signaling and computing an input response function of the trace based on the stimulus signaling; and executing a stochastic computation of the trace decay function based on a generated randomization value.

In Example 51, the subject matter of Example 50 optionally includes wherein the stochastic computation of the trace decay function is based on a probability-based decrementing of the trace state variable.

In Example 52, the subject matter of Example 51 optionally includes wherein the probability-based decrementing of the trace state variable is defined as $x/\tau$, wherein x is a value of the trace state variable and wherein $\tau$ is the exponential time constant associated with the parameter defining the temporal behavior of the trace.

In Example 53, the subject matter of any one or more of Examples 50-52 optionally include instructions for generating the randomization value using a linear-feedback shift register.

In Example 54, the subject matter of any one or more of Examples 50-53 optionally include instructions for comparing the randomization value against a value based on the current value of the trace to produce a comparison result; and instructions for decrementing the current value of the trace conditionally in response to the comparison result when the current value of the trace has been decayed to an extent wherein more than one time increment corresponds to a further incremental reduction in the value of the trace.

In Example 55, the subject matter of any one or more of Examples 50-54 optionally include wherein an intermediate value of the trace is represented by a first set of bits corresponding to a whole value and a second set of bits corresponding to a fractional value, and further comprising: instructions for applying a randomized rounding to the fractional value such that only the first set of bits is stored.

In Example 56, the subject matter of any one or more of Examples 50-55 optionally include wherein the temporal behavior of the trace is an exponential decay corresponding to a defined time constant.

In Example 57, the subject matter of any one or more of Examples 50-56 optionally include instructions for storing a plurality of state variables associated with different time constants.

In Example 58, the subject matter of any one or more of Examples 50-57 optionally include instructions for performing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 59, the subject matter of Example 58 optionally includes wherein in performing the delayed computation according to the instructions, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 60, the subject matter of any one or more of Examples 58-59 optionally include instructions for storing a quantity N of pre-computed constants $\alpha^{2^{\wedge}i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

Example 61 is at least one machine-readable medium containing instructions that, when executed by computing hardware, cause the computing hardware to computationally model a filtered temporal spike train trace in the digital domain, wherein the instructions are to cause the computing hardware to perform: storing a current value of the trace; storing a parameter defining temporal behavior of the trace; computing a decay function of the trace based on the parameter and on passage of discrete time increments; receiving stimulus signaling and computing an input response function of the trace based on the stimulus signaling; and executing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 62, the subject matter of Example 61 optionally includes wherein in performing the delayed computation according to the instructions, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 63, the subject matter of any one or more of Examples 61-62 optionally include instructions for storing a quantity N of pre-computed constants $\alpha^{2^\wedge i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

In Example 64, the subject matter of any one or more of Examples 61-63 optionally include instructions for performing a stochastic computation of the trace decay function based on a generated randomization value.

In Example 65, the subject matter of Example 64 optionally includes wherein the stochastic computation of the trace decay function is based on a probability-based decrementing of the trace state variable.

In Example 66, the subject matter of any one or more of Examples 64-65 optionally include wherein the probability of decrementing the trace state variable is defined as $x/\tau$, wherein x is the trace state variable and wherein $\tau$ is the exponential time constant associated with the parameter defining the temporal behavior of the trace.

In Example 67, the subject matter of any one or more of Examples 64-66 optionally include instructions for comparing the randomization value against a value based on the current value of the trace to produce a comparison result; and instructions for decrementing the current value of the trace conditionally in response to the comparison result when the current value of the trace has been decayed to an extent wherein more than one time increment corresponds to a further incremental reduction in the value of the trace.

In Example 68, the subject matter of any one or more of Examples 64-67 optionally include wherein an intermediate value of the trace is represented by a first set of bits corresponding to a whole value and a second set of bits corresponding to a fractional value, and further comprising: instructions for applying a randomized rounding to the fractional value such that only the first set of bits is stored.

In Example 69, the subject matter of any one or more of Examples 61-68 optionally include wherein the temporal behavior of the trace is an exponential decay corresponding to a defined time constant.

Example 70 is a system for computationally modeling a filtered temporal spike train trace in the digital domain, the system comprising: means for storing a current value of the trace; means for storing a parameter defining temporal behavior of the trace; means for computing a decay function of the trace based on the parameter and on passage of discrete time increments; means for receiving stimulus signaling and computing an input response function of the trace based on the stimulus signaling; and means for executing a stochastic computation of the trace decay function based on a generated randomization value.

In Example 71, the subject matter of Example 70 optionally includes wherein the stochastic computation of the trace decay function is based on a probability-based decrementing of the trace state variable.

In Example 72, the subject matter of Example 71 optionally includes wherein the probability-based decrementing of the trace state variable is defined as $x/\tau$, wherein x is a value of the trace state variable and wherein $\tau$ is the exponential time constant associated with the parameter defining the temporal behavior of the trace.

In Example 73, the subject matter of any one or more of Examples 70-72 optionally include means for generating the randomization value using a linear-feedback shift register.

In Example 74, the subject matter of any one or more of Examples 70-73 optionally include means for comparing the randomization value against a value based on the current value of the trace to produce a comparison result; and means for decrementing the current value of the trace conditionally in response to the comparison result when the current value of the trace has been decayed to an extent wherein more than one time increment corresponds to a further incremental reduction in the value of the trace.

In Example 75, the subject matter of any one or more of Examples 70-74 optionally include wherein an intermediate value of the trace is represented by a first set of bits corresponding to a whole value and a second set of bits corresponding to a fractional value, and further comprising: means for applying a randomized rounding to the fractional value such that only the first set of bits is stored.

In Example 76, the subject matter of any one or more of Examples 70-75 optionally include wherein the temporal behavior of the trace is an exponential decay corresponding to a defined time constant.

In Example 77, the subject matter of any one or more of Examples 70-76 optionally include wherein the system includes neuromorphic computing means that includes a plurality of neural network cores configured to send and receive spike messages, wherein the stimulus signaling includes the spike messages, and wherein the trace engine is a portion of a first neural network core of the plurality of neural network cores.

In Example 78, the subject matter of Example 77 optionally includes wherein the neuromorphic computing means are to operate in an asynchronous regime in which different operations of the trace decay modeler are computed over different amounts of time.

In Example 79, the subject matter of any one or more of Examples 77-78 optionally include wherein the neuromorphic computing means are to operate according to a spike timing-dependent plasticity model.

In Example 80, the subject matter of any one or more of Examples 70-79 optionally include means for storing a plurality of state variables associated with different time constants.

In Example 81, the subject matter of any one or more of Examples 70-80 optionally include means for performing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 82, the subject matter of Example 81 optionally includes wherein in the delayed computation, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 83, the subject matter of any one or more of Examples 81-82 optionally include means for storing a quantity N of pre-computed constants $\alpha^{2^{\wedge}i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

Example 84 is a system for computationally modeling a filtered temporal spike train trace in the digital domain, the system comprising: means for storing a current value of the trace; means for storing a parameter defining temporal behavior of the trace; means for computing a decay function of the trace based on the parameter and on passage of discrete time increments; means for receiving stimulus signaling and computing an input response function of the trace based on the stimulus signaling; and means for executing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

In Example 85, the subject matter of Example 84 optionally includes wherein in the delayed computation, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

In Example 86, the subject matter of any one or more of Examples 84-85 optionally include means for storing a quantity N of pre-computed constants $\alpha^{2^{\wedge}i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

In Example 87, the subject matter of any one or more of Examples 84-86 optionally include means for performing a stochastic computation of the trace decay function based on a generated randomization value.

In Example 88, the subject matter of Example 87 optionally includes wherein the stochastic computation of the trace decay function is based on a probability-based decrementing of the trace state variable.

In Example 89, the subject matter of any one or more of Examples 87-88 optionally include wherein the probability of decrementing the trace state variable is defined as $x/\tau$, wherein x is the trace state variable and wherein $\tau$ is the exponential time constant associated with the parameter defining the temporal behavior of the trace.

In Example 90, the subject matter of any one or more of Examples 87-89 optionally include means for comparing the randomization value against a value based on the current value of the trace to produce a comparison result; and means for decrementing the current value of the trace conditionally in response to the comparison result when the current value of the trace has been decayed to an extent wherein more than one time increment corresponds to a further incremental reduction in the value of the trace.

In Example 91, the subject matter of any one or more of Examples 87-90 optionally include wherein an intermediate value of the trace is represented by a first set of bits corresponding to a whole value and a second set of bits corresponding to a fractional value, and further comprising: means for applying a randomized rounding to the fractional value such that only the first set of bits is stored.

In Example 92, the subject matter of any one or more of Examples 84-91 optionally include wherein the temporal behavior of the trace is an exponential decay corresponding to a defined time constant.

In Example 93, the subject matter of any one or more of Examples 84-92 optionally include wherein the system includes neuromorphic computing means that includes a plurality of neural network cores configured to send and receive spike messages, wherein the stimulus signaling includes the spike messages, and wherein the trace engine is a portion of a first neural network core of the plurality of neural network cores.

In Example 94, the subject matter of Example 93 optionally includes wherein the neuromorphic computing means are to operate in an asynchronous regime in which different operations of the trace decay modeler are computed over different amounts of time.

In Example 95, the subject matter of any one or more of Examples 93-94 optionally include wherein the neuromorphic computing means are to operate according to a spike timing-dependent plasticity model.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims, along with the full scope of equivalents to which such claims are entitled.

**Claims**

1. A method for computationally modeling a filtered temporal spike train trace in the digital domain, the method being executed by computing hardware, and comprising:

   storing a current value of the trace;
   storing a parameter defining temporal behavior of the trace;
   computing a decay function of the trace based on the parameter and on passage of discrete time increments;
   receiving stimulus signaling and computing an input response function of the trace based on the stimulus signaling; and
   performing a stochastic computation of the trace decay function based on a generated randomization value.

2. The method of claim 1, wherein the stochastic computation of the trace decay function is based on a probability-based decrementing of the trace state variable.

3. The method of claim 2, wherein the probability-based decrementing of the trace state variable is defined as $x/\tau$, wherein x is a value of the trace state variable and wherein $\tau$ is the exponential time constant associated with the parameter defining the temporal behavior of the trace.

4. The method according to any one preceding claim, further comprising:

generating the randomization value using a linear-feedback shift register.

5. The method according to any one preceding claim, further comprising:

comparing the randomization value against a value based on the current value of the trace to produce a comparison result; and
decrementing the current value of the trace conditionally in response to the comparison result when the current value of the trace has been decayed to an extent wherein more than one time increment corresponds to a further incremental reduction in the value of the trace.

6. The method according to any one preceding claim, wherein an intermediate value of the trace is represented by a first set of bits corresponding to a whole value and a second set of bits corresponding to a fractional value, and further comprising:

applying a randomized rounding to the fractional value such that only the first set of bits is stored.

7. The method according to any one preceding claim, wherein the temporal behavior of the trace is an exponential decay corresponding to a defined time constant.

8. The method according to any one preceding claim, further comprising:

storing a plurality of state variables associated with different time constants.

9. The method according to any one preceding claim, further comprising:

performing a delayed computation of the trace decay function in response to a stimulus signal received after passage of a plurality of discrete time increments during which no stimulus signaling occurs and during which no computation of the trace decay function was performed, wherein the delayed computation takes into account decay of the trace occurring over the plurality of discrete time increments.

10. The method of claim 9, wherein in performing the delayed computation, at most $\log_2(n)$ iterative computation operations are performed based on the parameter defining the temporal behavior of the trace, wherein n represents the quantity of the plurality of discrete time increments during which no stimulus signaling occurs and over which the decay of the trace is to be computed.

11. The method according to any one of claims 9-10, further comprising:

storing a quantity N of pre-computed constants $\alpha^{2^i}$ wherein $\alpha$ represents the parameter defining the temporal behavior of the trace, N represents the number of binary digits representing the quantity of the plurality of discrete time increments during which no stimulus signaling occurs and over which the decay of the trace is to be computed, and i represents an iteratively-incremented bit-position index of the N binary digits.

12. At least one machine-readable medium containing instructions that, when executed by computing hardware, cause the computing hardware to execute the method according to any one of claims 1-11.

13. A system for computationally modeling a filtered temporal spike train trace in the digital domain, the system comprising means for executing the method according to any one of claims 1-11.

*FIG. 1A*

120 — DENDRITE ACCUM

130 —

110 —

130 —

130 —

140 — STATE, CFG

130 —

145 —

150 —

Δ

U,V etc.

UPDATE LOGIC

DENDRITIC COMPARTMENT STATE

— 155

SPIKE OUTPUT

*FIG. 1B*

110 —

160 —

130 —

130a

— 155

145

*FIG. 1C*

*FIG. 2A*

*FIG. 2B*

*FIG. 3*

*FIG. 4*

502 — STORE CURRENT VALUE OF TRACE

504 — STORE DECAY FILTERING FUNCTION

506 — SPIKE?

508 — INCREMENT COUNTER

N

Y

510 — GENERATE RANDOM VALUE

512 — COMPARE TRACE VALUE TO THRESHOLD

516 — THRESHOLD EXCEEDED?

518 — COMPUTE PRE-SPIKE TRACE VALUE BASED ON DECAY FUNCTION AND COUNTER VALUE, AND ROUND LSB'S BASED ON RANDOM VALUE

Y

N

520 — STOCHASTICALLY DECREMENT PRE-SPIKE TRACE VALUE BASED ON DECAY FUNCTION, COUNTER VALUE, AND RANDOM VALUE

522 — ADD SPIKE EFFECT

*FIG. 5*

| NumTimeBits | Number of bits in DeltaT encoding, so the maximum number of time steps that the trace variable can be advanced is $2^{NumTimeBits}-1$. (Implementation constant, typically 5-8.) |
|---|---|
| NumTraceBits | Number of bits used to represent the trace value Y. (Implementation constant, typically 6-7.) |
| Decay[0..NumTimeBits-1] | Pre-computed constant corresponding to $2^{NumTraceBits}\alpha^{2^i}$, for the exponential filtering constant $\alpha = e^{-\frac{1}{\tau}}$. (Programmed to achieve a particular desired time constant $\tau$.) |
| LambdaShift | Number of fractional bits of precision to include. (Implementation constant, typically 3-5.) |
| Lambda[0..NumTimeBits-1] | Pre-computed constant corresponding to $2^{NumTraceBits+LambdaShift}\left(\frac{1}{\tau}\right)^{2^i}$. (Programmed to achieve a particular desired time constant $\tau$.) |
| RandomThreshold[0..NumTimeBits-1] | Pre-computed constants, floor(1/(1-Decay[i]/$2^{NumTraceBits}$). Typically will be disabled (set to 0) for all but the lowest DeltaT bits, which also reduces the corresponding Lambda constants that need to be pre-computed. (Programmed to achieve a particular desired time constant $\tau$.) |
| Impulse | Amount to add to the trace variable on every input spike (impulse). Can vary from input to input to represent inputs of varying intensities. (Programmed to utilize the full dynamic range that Y provides, given the expected maximum input spike rate.) |

*FIG. 6A*

| Y | Unsigned exponentially filtered trace value. Initial value corresponds to the value at some time T. Output state corresponds to the trace value at time T+DeltaT. |
|---|---|
| DeltaT | Number of discrete time steps to advance Y. |
| X | Single bit indicating spike/impulse arrival on time T+DeltaT. Input is assumed to be zero over the interval [T+1,T+DeltaT-1]. |
| Random | NumTraceBits pseudorandom variable, with uniform distribution over $[0, 2^{NumTraceBits}-1]$. May be shared over many different trace variable calculations. Needs to be advanced from one time step to the next. |

## FIG. 6B

```
FOR i= 0..NumTimeBits-1 {
    bit = NumTimeBits - 1 - i
    IF DeltaT[bit]==1 {
        IF Y >= RandomThreshold[bit] {
            mul_op = Decay[bit]
        }
        ELSE {
            mul_op = Lambda[bit]
            do_random_threshold = true
        }
        mul_result = Y * mul_op

        IF do_random_threshold {
            IF Random < (mul_result >> LambdaShift) {
                Y = Y-1
            }
        }
        ELSE {
            Y = mul_result >> TraceBits
            IF Random < mul_result[TraceBits-1:0] {
                Y = Y+1
            }
        }
    }
    ELSE {
        SKIP (consumes no time/energy to compute)
    }
}
```

*FIG. 6C*

Europäisches
Patentamt

European
Patent Office

Office européen
des brevets

# EUROPEAN SEARCH REPORT

Application Number

EP 17 20 4237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRESSLOFF P C ET AL: "Discrete time leaky integrator network with synaptic noise", NEURAL NETWORKS, ELSEVIER SCIENCE PUBLISHERS, BARKING, GB, vol. 4, no. 6, 1 January 1991 (1991-01-01) , pages 789-801, XP025442697, ISSN: 0893-6080, DOI: 10.1016/0893-6080(91)90058-D [retrieved on 1991-01-01] * abstract * * page 790, left-hand column, line 20 - line 32 * * equation 2.1 * * page 792, right-hand column, line 3 - line 4 * * page 793, right-hand column, line 5 * * page 793, right-hand column, line 18 - line 32 * * page 794, left-hand column, line 5 - line 20 * | 1-13 | INV. G06N3/04 |
| A | HARSH KUMAR VERMA ET AL: "Linear feedback shift register based unique random number generator", INTERNATIONAL JOURNAL OF COMPUTER SCIENCE AND INFORMATICS, vol. 2, no. 4, 1 January 2012 (2012-01-01) , pages 77-82, XP055464305, ISSN: 2231-5292 * abstract * * section III * | 1-13 | TECHNICAL FIELDS SEARCHED (IPC) G06N G06F |

-/--

The present search report has been drawn up for all claims

| Place of search | Date of completion of the search | Examiner |
|---|---|---|
| The Hague | 18 April 2018 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 17 20 4237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUYOG GUPTA ET AL: "Deep Learning with Limited Numerical Precision", ARXIV.ORG, CORNELL UNIVERSITY LIBRARY, 201 OLIN LIBRARY CORNELL UNIVERSITY ITHACA, NY 14853, 9 February 2015 (2015-02-09), XP080677454, * abstract * * page 3, left column, section 3, second bullet point * | 1-13 | |
| A | FRIEDEMANN ZENKE ET AL: "Limits to high-speed simulations of spiking neural networks using general-purpose computers", FRONTIERS IN NEUROINFORMATICS, vol. 8, 11 September 2014 (2014-09-11), XP055464071, DOI: 10.3389/fninf.2014.00076 * abstract * * section 1, first paragraph * * sections 2.4-2.5 * * page 12, left-hand column, line 28 - line 33 * | 1-13 | |

TECHNICAL FIELDS
SEARCHED (IPC)

The present search report has been drawn up for all claims

| Place of search | Date of completion of the search | Examiner |
|---|---|---|
| The Hague | 18 April 2018 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)